# EUROPEAN PATENT APPLICATION

(11) **EP 1 598 814 A1**
(43) Date of publication of application: **23.11.2005**
(21) Application number: 04712194.2
(22) Date of filing: 18.02.2004
(51) Int. Cl.: G11B 5/852

(54) **IN-MAGNETIC-FIELD HEAT-TREATING DEVICE**

(30) Priority: 19.02.2003 JP 2003040981
(71) Applicant: Neomax Co., Ltd., Osaka-shi, Osaka 541-0041 (JP); Kabushikigaisya Toeikagakusangyou, Sendai-shi, Miyagi, 982-0032 (JP)
(72) Inventor: SUGIYAMA, Eiji; NEOMAX CO., LTD., Mishima-gun, Osaka 6180013 (JP); AOKI, Masaaki; NEOMAX CO., LTD., Mishima-gun, Osaka 6180013 (JP); KENJU, Hiroyuki; Kabushikigaisya Toeikagakusangyou, Sendai-shi, Miyagi 9820032 (JP); UTSUMI, Ryouichi Kabushikigaisya Toeikagakusangyou, Sendai-shi, Miyagi 9820032 (JP); ITAGAKI, Kiichi; Kabushikigaisya Toeikagakusangyou, Sendai-shi, Miyagi 9820032 (JP)
(74) Representative: Sajda, Wolf E.
(86) International application number: PCT/JP2004/001813
(87) International publication number: WO 2004/077413

(57) **Abstract**

A magnetic annealing device for inserting a recording medium (1) provided with an axial hole formed at a center thereof and having a disk shape into a chamber (10) and applying a heat treatment to the recording medium (1) in a magnetic field is provided with a magnetic circuit for forming a magnetic field in the chamber (10), the magnetic circuit comprises a pair of magnets (4 and 5) disposed with a distance therebetween along an axial direction of the axial hole and having magnetic fields directionally opposed to each other and a first ferromagnetic substance (6) disposed between the pair of magnets (4 and 5), wherein the recording medium (1) to be heat-treated is disposed at an intermediate position between the pair of magnets (4 and 5) facing each other in the state in which the first ferromagnetic substance (6) is inserted into the axial hole. A second ferromagnetic substance (7) having a ring shape is preferably disposed in a periphery of the recording medium (1).

## Description

### BACKGROUND OF THE INVENTION

### Field of the Invention

The present invention relates to a magnetic annealing device for inserting a recording medium provided with an axial hole at a center thereof and having a disk shape into a chamber and applying a heat treatment to the recording medium in a magnetic field.

### Description of the Related Art

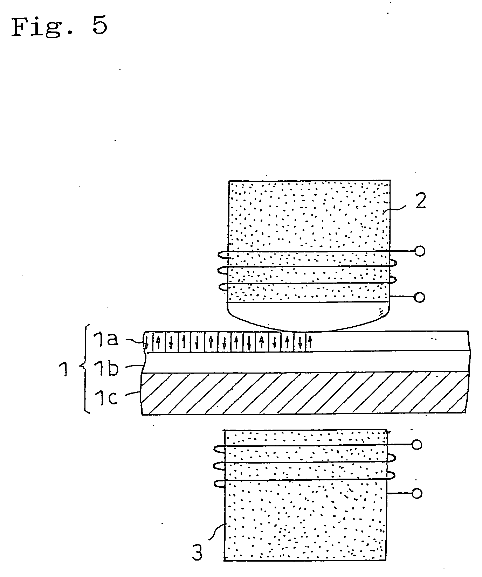

As a method of recording data on a recording medium, such as a hard disk, is known a vertical magnetic recording method. The vertical magnetic recording method has a potential of remarkably increasing a recording density in comparison to a longitudinal-direction recording method and, therefore, is a technology attracting an attention. Fig. 5 illustrates a specific example associated with a magnetic head and a recording medium used in the vertical magnetic recording method. In Fig. 5, a main magnetic pole 2 and an auxiliary magnetic pole 3 are disposed so as to sandwich a recording medium. The recording medium 1 comprises, in the order from the main-magnetic-pole side, a magnetic film 1a, a soft magnetic film 1b and a substrate 1c. Data is actually recorded on the magnetic film 1a, in which magnetization is performed in a vertical direction (in an upward and downward direction in Fig. 5) as shown in the drawing. The soft magnetic film 1b is provided between the magnetic film 1a and the substrate 1c in order to improve a reading performance of a magnetic head. A magnetization direction in the soft magnetic film 1b is vertical to the magnetization direction of the magnetic film 1a (in a horizontal direction in Fig. 5).

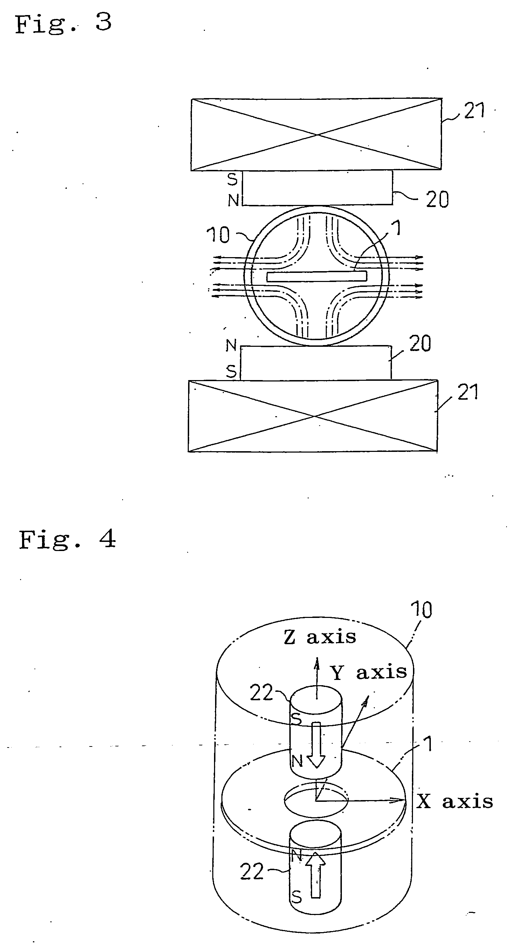

In the recording medium used in the vertical magnetic recording method, a magnetic anisotropy in a direction vertical to a main surface of the recording medium (magnetization direction) is demanded in the magnetic film 1a, while a magnetic anisotropy in a direction along the main surface of the recording medium is demanded in the soft magnetic film 1b. Because of that, a heat treatment is applied to the recording medium in a magnetic filed. Fig. 3 illustrates a magnetic annealing device for applying the heat treatment.

In Fig. 3, a chamber 10 is provided in a central part of the device, and a recording medium 1 is disposed in the chamber 10. On an outer side of the chamber 10 are disposed a pair of ferromagnetic substances 20 and a pair of magnet coils 21 so as to sandwich the chamber 10 in a vertical direction. A magnetic field formed in the chamber is directed as shown in the drawing. Therefore, a voltage is applied to the magnet coils 21 so that directions of magnetic fields in the pair of ferromagnetic substances 20 are opposite to each other. The in-magnetic-field heat treatment is applied to the recording medium at the temperature of, for example, 500°C in the state in which the magnetic fields are formed. Examples of the magnetic annealing device include a method of manufacturing a magnetic recording medium disclosed in No. 61-177630 of the Publication of the Unexamined Japanese Patent Applications, a magnetic field application device disclosed in No. 11-25424 of the same, and the like.

As described, the magnetic anisotropy in the vertical direction and the magnetic anisotropy in the horizontal direction are respectively demanded in the magnetic film and the soft magnetic film. Accordingly, in the case of the magnetic field formed in the chamber, the direction of the magnetic field at a central position thereof, where the recording medium 1 is disposed, is desirably as horizontal as possible.

However, in the constitution of the device shown in Fig. 3, the magnetic circuit is disposed outside the chamber 10, which does not provide a horizontal precision of the magnetization direction at a position where the soft magnetic film is disposed. The constitution further includes the problem that the disposition of the components constituting the magnetic circuit on the outer side of the chamber 10 leads to an increased size of the device.

As an alternative constitution in order to solve the foregoing problems, which is shown in Fig. 4, the magnetic circuit provided with a pair of permanent magnets 22 so as to render the directions of the magnetic fields opposite to each another may be disposed in the chamber 10. When not only the electromagnets but also the permanent magnets 22 are used, the magnetic circuit can be easily disposed in the chamber. Further, the horizontal precision of the magnetization direction can be improved in comparison to the constitution of Fig. 3 because the pair of permanent magnets 22 can be disposed in close proximity. Moreover, the magnetic circuit can be downsized because the permanent magnets 22 are disposed in the chamber.

Yet, the constitution of the magnetic circuit shown in Fig. 4 was not good enough to satisfy an expected horizontal precision of the magnetization direction.

The present invention has been implemented to deal with the foregoing problems. A main object thereof is to provide a magnetic annealing device effectuating an improved horizontal precision of the direction of the magnetic field at the position where the recording medium is disposed when the recording medium having the magnetic film and the soft magnetic film is subjected to the in-magnetic-field heat treatment.

### SUMMARY OF THE INVENTION

In order to solve the foregoing problems, the present invention provides the following magnetic annealing device. A magnetic annealing device for inserting a recording medium provided with an axial hole formed at a center thereof and having a disk shape into a chamber and applying a heat treatment to the recording medium in a magnetic field is characterized in comprising a magnetic circuit for forming a magnetic field in the chamber,
the magnetic circuit comprising a pair of magnets disposed with a distance therebetween along an axial direction of the axial hole and respectively having magnetic fields directionally opposed to each other and a first ferromagnetic substance disposed between the pair of magnets, and that
the recording medium as a subject of the heat treatment is adapted to be disposed at an intermediate position between the pair of magnets facing each other in the state in which the first ferromagnetic substance is inserted into the axial hole.

An operation and effect of by the magnetic annealing device according to the foregoing constitution are as follows. First, the pair of magnets as components constituting the magnetic circuit are disposed in the chamber so as to render their directions of magnetic fields opposed to each other. The first ferromagnetic substance is disposed between the pair of magnets. The recording medium is provided with the axial hole at the center thereof and has the disk shape. The in-magnetic-field heat treatment is applied to the recording medium in the state in which the first ferromagnetic substance is inserted into the axial hole. Because lines of magnetic forces induced from the pair of magnets repel each other, the directions of the magnetic fields (lines of magnetic forces) at the intermediate position between the pair of magnets facing each other are made to be horizontal. The presence of the first ferromagnetic substance therebetween guides many of the lines of the magnetic forces induced from the pair of magnets in a direction where they pass through inside of the first ferromagnetic substance. Therefore, a magnetization direction at the intermediate position is made further horizontal. As a result, when the recording medium having the magnetic film and the soft magnetic film is heat-treated in the magnetic field, the magnetic annealing device effectuating an improved horizontal precision of the direction of the magnetic field at the position where the recording medium is disposed can be provided.

In the foregoing constitution, a second ferromagnetic substance having a ring shape is further preferably disposed in an outer periphery of the disposed recording medium.

When the second ferromagnetic substance is provided, the horizontal property of the magnetization direction can be further improved.

The magnet preferably includes Fe, Ni, Co, Al and Ti in its composition. The chamber is exposed to a high temperature when the heat treatment is performed, however, the magnet including the foregoing materials can maintain its magnetic characteristic in such a high-temperature atmosphere.

In the fist ferromagnetic substance, a saturation magnetization is preferably at least 1.5 T (tesla) and at most 2.4 T. Then, the horizontal property of the magnetization direction can be improved. At anything below 1.5 T, the demanded magnetic anisotropy cannot be obtained.

The second ferromagnetic substance is preferably an anisotropic magnet when the before-mentioned member having the ring shape is formed.

When the permanent magnet is used, the horizontal element of the magnetization direction can be further increased. As the permanent magnet is preferably used an Alnico magnet in terms of its characteristic.

In the case in which a temperature in the heat treatment is approximately 25 - 300°C, an R-T-B based magnet or a Sm-Co magnet, which are represented by a Nd-Fe-B series, may be used.

The ring-shape member may be formed as a single member, and also may be formed from a plurality of segments disposed in a ring shape for the convenience of an easy manufacturing or the like.

As a preferable method used in disposing the segments in the ring shape, a room for disposing the segments in a vessel having a ring shape and made of a non-magnetic material, such as stainless steel, is prepared and the room in which the segments are disposed is sealed by a non-magnetic member (stainless steel).

### BRIEF DESCRIPTION OF THE DRAWINGS

- Fig. 1: is a schematic view illustrating a constitution of a magnetic annealing device according to a first embodiment of the present invention.
- Fig. 2: is a schematic view illustrating a constitution of a magnetic annealing device according to a second embodiment of the present invention.
- Fig. 3: is an illustration of a magnetic annealing device according to a conventional technology.
- Fig. 4: is an illustration of an example of an improved conventional magnetic annealing device.
- Fig. 5: is an illustration of a relationship between a magnetic head and a recording medium.
- Fig. 6: is an illustration of an example of a constitution in which segments are disposed in a ring shape.

### PREFERRED EMBODIMENTS OF THE INVENTION

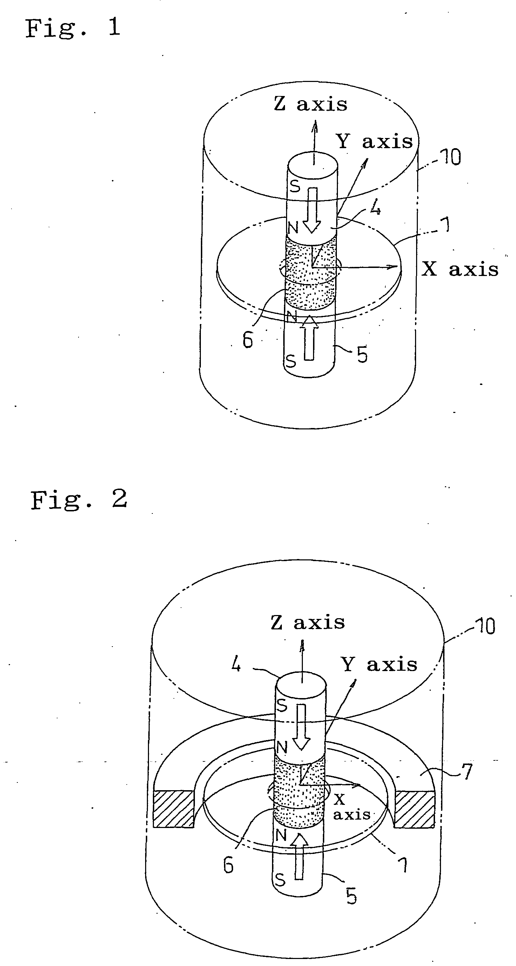

Magnetic annealing devices according to preferred embodiments of the present invention are described referring to the drawings. Fig. 1 is a schematic view illustrating a constitution of a magnetic annealing device according to a first embodiment of the present invention.

### Constitution according to First Embodiment

In Fig. 1, a pair of permanent magnets 4 and 5 is disposed in a chamber 10 so as to oppose their magnetic fields directionally to each other (shown in arrows). The permanent magnets 4 and 5 have a cylindrical shape. A first ferromagnetic substance 6 having the same cylindrical shape is disposed between the pair of permanent magnets 4 and 5. Respective end surfaces (N-pole side) of the permanent magnets 4 and 5 and both end surfaces of the first ferromagnetic substance 6 are in close contact with each other when they are disposed. Further, the permanent magnets 4 and 5 and the first ferromagnetic substance 6 have an identical axial direction and outer diameter dimension in their cylindrical bodies. According to the foregoing constitution, a magnetic flux leakage is minimized.

A recording medium 1 to be heat-treated is shown by an imaginary line in Fig. 1. The recording medium 1 has a disk shape and is provided with an axial hole formed at a center thereof. The first ferromagnetic substance 6 is inserted into the axial hole. As shown in a typical structure of the recording medium 1 of Fig. 5, the recording medium comprises a substrate, a soft magnetic film and a magnetic film. The recording medium may have a recording surface on one side thereof or on both sides thereof. The soft magnetic film of the recording medium 1 is disposed at an intermediate position between the pair of permanent magnets 4 and 5 facing each other, and to be more specific, disposed at an intermediate position between N poles facing each other because lines of magnetic forces repel with each other and directions of magnetic fields are thereby made horizontal at the intermediate position. More specifically, the directions of the magnetic fields are vertical (at the right angle with respect to the recording surface) in a vicinity of the N poles and gradually bent to be finally made horizontal (in parallel with the recording surface) at the position of the soft magnetic film of the recording medium 1 (see Fig. 3). The directions of the magnetic fields are preferably bent as precipitously as possible. Thereby, a horizontal property of a magnetization direction in the soft magnetic film and a vertical property of a magnetization direction in the magnetic film respectively in the recording medium can be both obtained.

The pair of permanent magnets 4 and 5 is preferably made of a material including Fe, Ni, Co, A1 and Ti in its composition. For example, an Alnico magnet can be used. In an in-magnetic-field heat treatment, a temperature in the chamber 10 increases to 25 - 50°C depending on a material quality of the magnetic film. A magnetic characteristic of the Alnico magnet is not reduced in the foregoing range of the temperatures. As an alternative option, a samarium cobalt magnet may be also used. When the foregoing magnets are used, the magnets can be disposed in the chamber.

When the temperature in the in-magnetic-field heat treatment is at most 300°C, a R-T-B based magnet represented by a Nd-Fe-B series may be used. The R-T-B based magnet has a high magnetic flux density, which further downsizes the magnetic circuit. Examples of a composition and a manufacturing method relating to a rare-earth magnet of a R-Fe-B series are recited in No. 4,770,723 and No 4,792,368 of the US Patent Applications.

The first ferromagnetic substance 6 can employ a material such as SS400 and S15C.

An axial thickness of the first ferromagnetic substance 6 disposed between the pair of permanent magnets 4 and 5 is preferably set to 35 - 45 times as thick as the magnetic film 1a and the soft magnetic film 1b of the recording medium 1. The first ferromagnetic substance 6 constituted as described can converge a magnetic leakge flux in a predetermined magnetic-field space and thereby increase the horizontal element of the magnetization direction at the intermediate position.

The first ferromagnetic substance 6 having a saturation magnetization of at least 1.5 T and at most 2.4 T is preferably used.

### Constitution according to Second Embodiment

Next, a magnetic annealing device according to a second embodiment of the present invention is described referring to Fig. 2. A distinguishing difference between the constitutions of Figs. 1 and 2 is the disposition of a second ferromagnetic substance 7 having a ring shape at a position in an outer periphery of the recording medium 1 (on an outer side of an end surface of the disk). The rest of the constitution is the same as in the first embodiment. The second ferromagnetic substance 7 can employ the same material as in the first ferromagnetic substance 6. A thickness of the second ferromagnetic substance 7 is preferably made thinner than the thickness of the first ferromagnetic substance 6 and approximately set to 1/1.5 - 1/8 of the thickness of the first ferromagnetic substance 6. The second ferromagnetic substance 7 having the ring shape can converge the magnetic leakge flux in the predetermined magnetic-field space. The horizontal element of the magnetization direction at the intermediate position can be further increased.

According to the foregoing constitution, a magnetic anisotropy of the magnetic film 1a formed in the recording medium 1 can be made vertical, while a magnetic anisotropy of the soft magnetic film 1b is made horizontal.

Results obtained from a theoretical calculation of a magnetic field strength relating to each constitution shown in Figs. 1, 2 and 4 are compared to one another. A magnetic field strength B denotes a strength at the intermediate position (origin) in a X-Y plane direction. An origin of the X, Y and Z axes is placed at the intermediate position where the recording medium 1 is disposed. A magnetic field strength Bz denotes a strength at the intermediate position (origin) in a Z-axis direction (also an axial direction of the recording medium).
A comparison example (Fig. 4) ··· B = 125G (gauss)
Bz = 6.6G
First embodiment (Fig. 1) ··· B = 210G
Bz = 1.7G
Second embodiment (Fig. 2) ··· B = 278G
Bz = 1.4G

In the first embodiment, the value of B is larger and the value of Bz is considerably smaller than in the comparison example, from which it is learnt that the horizontal property of the magnetization direction at the intermediate position is increased and that the vertical element Bz at the intermediate position is considerably decreased. In the case of the second embodiment, the foregoing tendency is more remarkable. In other words, it was confirmed that the disposition of the first ferromagnetic substance 6 and the second ferromagnetic substance 7 could lead to the improvement of a magnetic-field characteristic.

### OPERATION

A step of manufacturing the recording medium by means of the magnetic annealing device according to the present invention is simply described as follows. The recording medium 1 provided with the magnetic film 1a and the soft magnetic film 1b formed on the substrate 1c is disposed at a predetermined position in the magnetic annealing device. At the center of the recording medium 1 is provided with the axial hole. The magnetic circuit shown in Figs. 1 and 2 is previously set in the recording medium 1, and the recording medium 1 provided with the magnetic circuit is inserted into the device. When the second ferromagnetic substance 7 having the ring shape is used, the second ferromagnetic substance 7 is set in the outer periphery of the recording medium 1 so as to be on a same horizontal plane as a main surface of the recording medium 1. After the settings in the magnetic annealing device are completed, a temperature in the device is set to, for example, 500°C. Then, the heat treatment is applied to the recording medium so that the magnetization direction of the magnetic film 1a is set in a predetermined direction. The recording medium is cooled down after a predetermined length of time, the magnetic anisotropy can be fixed.

### ANOTHER EMBODIMENT

It was recited in the second embodiment that the same material as in the first ferromagnetic substance 6 was used for the second ferromagnetic substance 7 having the ring shape. The ring-shape member may be formed from a magnet (permanent magnet). When the permanent magnet is used, the horizontal element of the magnetization direction of the soft magnetic film 1b can be increased. The Alnico magnet is preferably used for the permanent magnet. The ring-shape member may be formed, in place of the formation as a single (unit type) member, from a plurality of segments disposed in the ring shape.

Further, when the temperature in-magnetic-field heat treatment is low, a Sm-Co magnet or a Nd-Fe-B based magnet may be used.

In the case in which the ring-shape member is formed from the permanent magnet, magnetic poles of the ring-shape member are formed so that the line of the magnetic force extending from the first ferromagnetic substance 6 to the second ferromagnetic substance 7 can be directed along a direction from the center of the recording medium 1 toward a radial direction thereof.

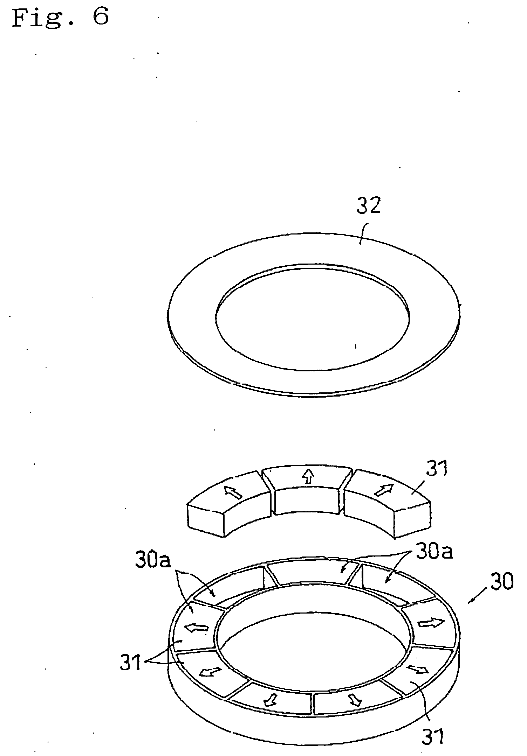

As a method of disposing the magnets used as the segments in the ring shape, as shown in Fig. 6, a room 30a for disposing segments 31 in a vessel 30 having a ring shape and made of a non-magnetic material, such as austenite-based stainless steel, is provided and the room 30a having the segments 31 disposed therein is sealed by a non-magnetic sealing member 32. Each arrow in the drawing denotes a magnetization direction.

In the present embodiment, the N poles of the permanent magnets are opposed to each other. As an alternative arrangement, however, S poles may be opposed to each other.

## Claims

1. A magnetic annealing device for inserting a recording medium provided with an axial hole at a center thereof and having a disk shape into a chamber and applying a heat treatment to the recording medium in a magnetic field **characterized in** comprising a magnetic circuit for forming a magnetic field in the chamber,
the magnetic circuit comprising a pair of magnets disposed with a distance therebetween along an axial direction of the axial hole and respectively having magnetic fields directionally opposed to each other and a first ferromagnetic substance disposed between the pair of magnets, and that
the recording medium as a subject of the heat treatment is adapted to be disposed at an intermediate position between the pair of magnets facing each other in the state in which the first ferromagnetic substance is inserted into the axial hole.

2. A magnetic annealing device as claimed in Claim 1, **characterized in that** a second ferromagnetic substance having a ring shape is disposed in an outer periphery of the disposed recording medium.

3. A magnetic annealing device as claimed in Claim 1 or 2, **characterized in that** the magnets include Fe, Ni, Co, Al and Ti in a composition thereof.

4. A magnetic annealing device as claimed in any of Claims 1 through 3, **characterized in that** the first ferromagnetic substance has a saturation magnetization of at least 1.5 T and at most 2.4 T.

5. A magnetic annealing device as claimed in Claim 2; **characterized in that** the second ferromagnetic substance is an anisotropic magnet.

6. A magnetic annealing device as claimed in Claim 5, **characterized in that** the second ferromagnetic substance is an Alnico magnet.

7. A magnetic annealing device as claimed in Claim 5 or 6, **characterized in that** the member having the ring shape constitutes a plurality of segments disposed in a ring shape.

8. A magnetic annealing device as claimed in Claim 7, **characterized in that** the plurality of segments is housed in a vessel having a ring shape and made of a non-magnetic material.
